# EUROPÄISCHE PATENTANMELDUNG

(11) **EP 0 785 016 A1**
(43) Veröffentlichungstag der Anmeldung: **23.07.1997**
(21) Anmeldenummer: 96100667.3
(22) Anmeldetag: 17.01.1996
(51) Int. Cl.: B01D 53/75, B01D 53/84, B01D 53/32, B01J 12/00

(54) **Verfahren zur Reinigung von schadstoffhaltiger Abluft durch Kombination einer biologischen Reinigungsstufe mit einer nicht-thermischen Plasmareinigungsstufe**

(71) Anmelder: Rafflenbeul & Partner, 65931 Frankfurt/Main (DE)
(72) Erfinder: Rafflenbeul, Rolf, Dipl.-Ing., D-60529 Frankfurt/Main (DE)
(74) Vertreter: Kindler, Matthias, Dr. Dipl.-Chem.

(57) **Zusammenfassung**

Die Erfindung betrifft ein Verfahren zur Reinigung von schadstoffhaltiger, insbesondere organische Schadstoffe enthaltender Abluft, das dadurch gekennzeichnet ist, daß man die Abluft durch eine biologische Reinigungsstufe und eine nicht-thermische Plasmareinigungsstufe führt. In bevorzugten Ausführungsformen wird die behandelte Abluft durch bzw. über einen absorbierenden bzw. adsorbierenden Moderator geführt, der der nicht-thermischen Plasmareinigungsstufe nachgeschaltet ist. Ferner ist es bevorzugt, den Moderator mit einem Desorptionsgas zu behandeln und zu regenerieren und die desorbierte Mischung in die nicht-thermische Plasmareinigungsstufe oder in die biologische Reinigungsstufe zurückzuführen.

## Beschreibung

Die vorliegende Erfindung betrifft ein Verfahren zur Entfernung von Schadstoffanteilen in Abluft, insbesondere ein Verfahren, bei dem ein biologischer Reinigungsschritt mit der Reinigung durch ein nicht-thermisches Plasma kombiniert wird.

Mit der zunehmenden Bedeutung des Umweltschutzes haben sich in den letzten Jahren eine Reihe von Verfahren zur Entfernung von Schadstoffen (Emissionen), z.B. von organischen Lösemitteln, in Abluft etabliert. Grundsätzlich unterscheidet man zwischen lösemittelverbrennenden Prozessen und nichtverbrennend arbeitenden Abluftreinigungsverfahren. Zu den nicht-verbrennend arbeitenden Verfahren zählen Sorption (Adsorption und Absorption), Kondensation/Tiefbettfaserfiltration, biologische Reinigungsverfahren und Plasmaverfahren.

Biologische Verfahren werden vor allem dann eingesetzt, wenn geringe Belastungen (bis 3 g/m³ Abluft) an organischen Schadstoffen in großen Luftmengen abgebaut werden sollen. Technisch bewährt haben sich Biofilter- und Tropfkörperanlagen (Biowäscher), gelegentlich kommen jedoch auch Membranverfahren zur Anwendung. Bei den Tropfkörperanlagen wird in dem Absorptionsreaktor die Abluft im Gegenstrom mit einer Absorptionsflüssigkeit (Wasser oder Aktivkohlesuspension) ausgewaschen. Das Absorptionsmittel enthält suspendierte Mikroorganismen. Nach Luftzufuhr wird das im Wasser von den Mikroorganismen resorbierte Lösungsmittel in einem der biologischen Abwasserreinigung analogen Vorgang metabolisiert. Kennzeichnend für die Tropfkörperverfahren ist somit, daß intermediär Abwasser aus Abluft hergestellt wird.

Eine neuere Entwicklung stellen Festbett- bzw. Biofilteranlagen (Festbett/Biobeete) dar, die z.B. mit inerten Füllkörpern arbeiten, auf denen sich Hefen und Pilze ansiedeln. Die wirksamen Mikroorganismen sind in allen Anlagenausführungen nahezu gleich und absorbieren in gesättigter feuchter Luft die Lösemittelbestandteile der Luft und bauen sie ab.

Ein wesentlicher Nachteil der biologischen Anlagen ist, daß diese derzeit nicht in der Lage sind, bestimmte organische Verbindungen, wie z.B. Butylacetat oder Chlorkohlenwasserstoffe, wirkungsvoll abzubauen. Außerdem benötigen Biofilter mit ca. 1 m² Grundfläche pro 100 m³ Abluft/h eine erhebliche Menge an Platz. Biowäscher benötigen weniger Fläche, dafür in der Regel jedoch mehr Höhe.

Von Plasmaverfahren spricht man, wenn die in einem Plasma erzeugte elektronische Anregungsenergie direkt in die schadstoffhaltige Luft eingetragen wird. Dabei bilden sich in der Luft reaktive Moleküle, freie Atome, Radikale und Ionen, die untereinander und mit den Schadstoffen reagieren und diese umwandeln bzw. abbauen. Da die elektronische Anregungsenergie sehr hohen Temperaturen (1.000-100.000°C) entspricht, aber die Temperatur in den behandelten Gasen sich nur unwesentlich erhöht, spricht man von nicht-thermischen Plasmaverfahren. Plasmaverfahren finden nicht nur bei Kohlenwasserstoffen und Halogenkohlenwasserstoffen Anwendung, sondern lassen sich beispielsweise auch zum Abbau von SO₂, H₂S oder NO_{X} einsetzen. Plasmaverfahren werden in der Regel bei niedrigen Schadstoffkonzentrationen (< 600 mg/m³ C-Gehalt des Lösungsmittels) verwendet, wenn ein thermischer Abbau durch katalytische Nachverbrennung zu aufwendig wäre. Einsatzgebiete sind daher die Geruchsreduzierung, Entgiftungen (Bodensanierungen), Kläranlagen, lackverarbeitende Industrie, Entkeimung, Tierverwertung und Lebensmittelbereiche. Ein Nachteil des Verfahrens ist, daß im Zuge der Abbaureaktion des Schadstoffs mit den angeregten Luftmolekülen wesentlich giftigere Stoffe als die originären Schadstoffe gebildet werden können (z.B. Formaldehyd). Daher werden häufig dem eigentlichen Plasmaverfahren Moderatoren nachgeschaltet, die z.B. als Katalysator und Adsorber (sog. Adsorptionskatalysatoren) die gecrackten Schadstoffe in konzentrierter Form anreichern, wobei diese dann mit den ionisierten Gasbestandteilen abreagieren. In ihrer Auswirkung nicht bekannte Substanzen können so neutralisiert werden. Darüberhinaus erreicht man durch den Einsatz von Moderatoren gegebenenfalls, daß auch die angeregten bzw. ionisierten Gasbestandteile mit schädlichem Charakter (z.B. Ozon) umgesetzt werden, damit diese nicht in die Umwelt abgegeben werden.

Zu den oben genannten Zwecken verwendet man z.B. Metallkatalysatoren aus Nichtedelmetallen, aber auch Edelmetallkatalysatoren (Wabenkörper), Aktivkohle und flüssige Moderatoren (Salzlösungen).

Das Plasmaverfahren verwandelt einfache organische Moleküle mit geringer chemischer Bindungsenergie mit einem Wirkungsgrad von über 90% in CO₂ und Wasser. Bei der Plasmabehandlung von Halogenkohlenwasserstoffen entsteht zusätzlich Halogenwasserstoffsäure. Beim Abbau von NO_{X}, H₂S/SO₂ bildet sich N₂ bzw. H₂SO₄ (unter Wasseranlagerung an SO₃). Ein Nachteil ist jedoch, daß stabile Moleküle (z.B. Methan) mit wirtschaftlich vertretbaren Betriebskosten nur zu 20-30% abgebaut werden können.

Im Hinblick auf die oben angeführten Nachteile besteht ein Bedarf an der Entwicklung von Verfahren, die alle Schadstoffgruppen gleichermaßen effektiv aus dem zu reinigenden Gas entfernen. Ein solches Verfahren muß zudem so ausgelegt werden können, daß der Platzbedarf und der Energieverbrauch so gering wie möglich gehalten werden.

Die oben angeführten Probleme werden durch ein Verfahren zur Reinigung von schadstoffhaltiger Abluft gelöst, das dadurch gekennzeichnet ist, daß man die Abluft durch eine biologische Reinigungsstufe und eine nicht-thermische Plasmareinigungsstufe führt.

Das erfindungsgemäße Verfahren eignet sich grundsätzlich für alle Schadstoffe, die in einer biologischen Reinigungsstufe oder einer nicht-thermischen Plasmareinigungsstufe abgebaut werden können. Das erfindungsgemäße Verfahren eignet sich insbesondere für organische Schadstoffe und führt zu besonders vorteilhaften Ergebnissen, wenn die Schadstoffmischung Komponenten, wie z.B. Halogenkohlenwasserstoffe oder Butylacetat, enthält, die in einer biologischen Reinigungsstufe nur ungenügend abgebaut werden. Die Mischung organischer Schadstoffe kann in geringer Menge auch anorganische Verbindungen (z.B. SO₂, H₂S oder NO_{X}) enthalten, die in einem nicht-thermischen Plasma abgebaut werden können.

Als biologische Reinigungsstufe eignen sich alle im Stand der Technik bekannten Verfahrenstypen, wie z.B. Biofilter (Biobeete/Festbett), Biowäscher oder Biomembranverfahren.

Günstige Verfahrensparameter für die biologische Reinigungsstufe umfassen eine Ablufttemperatur von 15 bis 60°C, eine Luftfeuchte von 75 bis 99% und eine Raumbelastung von 30 bis 250 g Schadstoffe / m³ Biomaterial x h. Zur Einstellung der Luftfeuchte kann es von Vorteil sein, biologischen Reinigungsstufen vom Typ Biofilter eine Befeuchtungszone vorzuschalten.

Hinsichtlich des in der Plasmareinigungsstufe eingesetzten Reaktortyps gibt es keine besonderen Beschränkungen. Beispielsweise kann ein dielektrischer Barrierenreaktor oder ein Kugelreaktor verwendet werden. Von dielektrischen Barrienrenreaktoren spricht man, wenn die Elektroden mit einem Isolierstoff, vorzugsweise aus Glas, Keramik oder organischem Isolationsmaterial, überzogen sind. Für das erfindungsgemäße Verfahren eignen sich gleichermaßen im Kreuzstrom (die Elektroden werden im Kreuzstrom angeströmt) und parallel betriebene dielektrische Barrierereaktoren. Bei letzteren strömt die Abluft entlang der Elektroden, z.B. durch lange Glasröhren.

Günstige Verfahrensbedingungen für Plasmareaktoren sind durch eine Feldstärke von 1.500 bis 50.000 V/cm, eine Frequenz von 50 bis 3.000 Hz und eine Temperatur von -20°C bis +300°C gekennzeichnet.

In einer bevorzugten Ausführungsform wird die biologische Reinigungsstufe der nicht-thermischen Plasmareinigungsstufe vorgeschaltet.

In diesem Fall ist es von Vorteil, wenn man die durch die nicht-thermische Plasmareinigungsstufe geführte Abluft in die biologische Reinigungsstufe oder in die Plasmareinigungsstufe (in einem zweiten Zyklus) zurückführt.

Eine weitere vorteilhafte Ausführungsform sieht vor, daß man die nicht-thermische Plasmareinigungsstufe der biologischen Reinigungsstufe vorschaltet.

Diese Verfahrensvariante ermöglicht es, auch toxische und üblicherweise für biologische Abbauprozesse schlecht geeignete Substanzen, wie z.B. Cyan, Acrylsäurederivate oder andere Gifte, durch Vorbehandlung in der Plasmareinigungsstufe für die biologische Reinigungsstufe aufzubereiten. Üblicherweise wird die Einstellung der Plasmareaktion z.B. durch Vorgabe der Feldstärke und Frequenz spezifisch der Toxitätsgrenze für die in der biologischen Reinigungsstufe wirksam werdenden Mikroorganismen angepaßt. Die entstehende, teilweise abgebaute Schadstoffmischung wird in der biologischen Reinigungsstufe durch geeignete Wahl der Bedingungen (Temperatur, Feuchte und Raumbelastung) dann vollständig abgebaut.

Bei beiden Ausführungsformen (vorgeschaltete biologische Reinigungsstufe bzw. vorgeschaltete nicht-thermische Plasmareinigungsstufe) kann es von Vorteil sein, zwischen die beiden Reinigungsstufen Kühl- bzw. Vorwärmsysteme zu schalten.

Eine besonders vorteilhafte Ausführungsform ist dadurch gekennzeichnet, daß man die Abluft nach der Plasmareinigungsstufe durch bzw. über einen absorbierenden bzw. adsorbierenden Moderator führt. Der Einsatz eines solchen Moderators ermöglicht eine Verfahrensführung, bei der in der Plasmareinigungsstufe (vor- oder nachgeschaltet) die organischen Schadstoffe nicht vollständig zu CO₂ und H₂O abgebaut werden, sondern ein Teil nur gecrackt wird, d.h., oxidativ zu Bruchstücken geringerer Molekularmasse abgebaut wird. Diese Teiloxidation ermöglicht eine beträchtliche Energieeinsparung in der Plasmareinigungsstufe, kann jedoch zu reaktiven oder toxischen (z.B. Formaldehyd) Bestandteilen führen, die weder in die Umwelt noch in eine nachgeschaltete biologische Reinigungsstufe gelangen sollten. Um dies zu vermeiden, sieht das erfindungsgemäße Verfahren in einer bevorzugten Ausführungsform die Wahl eines geeigneten Moderators vor, der die chemische Nachbehandlung des teiloxidierten Schadstoffgemischs, das die Plasmareinigungsstufe verläßt, ermöglicht. Dieses behandelte Gemisch kann dann je nach bereits erzieltem Reinigungsgrad in einzelne Verfahrensstufen zurückgeführt oder in unschädlicher Form an die Umwelt abgegeben werden.

Für das erfindungsgemäße Verfahren wählt man vorteilhafterweise den Moderator aus Unedelmetallkatalysatoren, Edelmetallkatalysatoren, Aktivkohle, Salzlösungen, Calciumcarbonat, Dolomit, Metallhydroxiden, wässrigen Metallhydroxidlösungen, Rinde, Torf, Rindenmulch, Trester oder geeigneten Kombinationen dieser Moderatoren aus.

In einer bevorzugten Ausführungsform wird der Moderator mit einem Desorptionsgas behandelt und regeneriert. Dies ermöglicht, daß in vorteilhafter Weise das aus dem Moderator desorbierte Gas in die biologische Reinigungsstufe oder in die nicht-thermische Plasmareinigungsstufe (in einem zweiten Zyklus) zurückgeführt werden kann.

Bei vorgeschalteter biologischer Reinigungsstufe kann sich die Rückführung des desorbierten Gases in die biologische Reinigungsstufe als vorteilhaft erweisen, da die teiloxidierten Schadstoffe in bzw. auf dem Moderator angereichert werden und so vermieden werden kann, daß der in der biologischen Reinigungsstufe zu behandelnde Abgasmassenstrom allmählich ein unendlich großes Volumen annimmt. Ferner wird der Moderator zweckmäßigerweise so gewählt, daß, wie oben angeführt, die in der teilgereinigten Abluft vorhandenen Ionenbestandteile neutralisiert werden, um eine keimtötende Wirkung in der biologischen Reinigungsstufe zu verhindern.

Die Rückführung des desorbierten Gases in die Plasmareinigungsstufe (in einem zweiten Zyklus) kann dagegen den Wirkungsgrad verbessern, da die teiloxidierten Schadstoffbestandteile eine Anreicherung erfahren. Dies ist darauf zurückzuführen, daß die Wahrscheinlichkeit, mit der Ionen und abzubauende Schadstoffmoleküle in der Plasmareinigungsstufe aufeinandertreffen, mit der Konzentration abnehmen. Die Rückführung in die Plasmareinigungsstufe nach der Desorption von einem geeigneten Moderator führt daher in der Regel zu einer besseren Energieausnützung bzw. geringeren Betriebskosten.

Bei vorgeschalteter biologischer Reinigungsstufe und nachgeschaltetem nicht-thermischem Plasma ist es jedoch bevorzugt, die plasmabehandelte Abluft in die biologische Reinigungsstufe zurückzuführen.

Vorteilhafterweise wird ein Moderator eingesetzt, der in zwei räumlich getrennten, parallel geschalteten Einheiten vorliegt. Man führt die Abluft aus der Plasmareinigungsstufe durch eine Einheit, während man die andere Einheit (bevorzugtermaßen nachdem deren Ab- bzw. Adsorptionswirkung erschöpft ist) mit einem Desorptionsgas behandelt und regeneriert und gegebenenfalls das aus dem Moderator desorbierte Gas in die biologische Reinigungsstufe oder die nicht-thermische Plasmareinigungsstufe zurückführt. Diese Verfahrensvariante ermöglicht in vorteilhafter Weise eine kontinuierliche Betriebsführung, da, nachdem die Ab- bzw. Adsorptionswirkung einer Einheit erschöpft ist, das Verfahren zur Desorption dieser Einheit nicht unterbrochen werden muß.

Für die oben beschriebene Verfahrensvariante ist es von Vorteil, Moderatoren mit hoher Adsorptionswirkung einzusetzen (z.B. auf Aktivkohlebasis). Wird solch ein Katalysator zusätzlich mit einer geeigneten Unedelmetallösung behandelt (z.B. Fe₂(SO₄)₃-Lösung, CuSO₄-Lösung), kann er mehrere Funktionen gleichzeitig erfüllen:
- er wirkt adsorptiv auf das nach der Plasmareinigungsstufe noch verbliebene Produktgemisch;
- er katalysiert Redoxreaktionen, indem am Katalysator Ionen und Sauerstoffverbindungen (z.B. auch Ozon, das im Plasma gebildet wird) katalytisch bei niedrigen Temperaturen zur Reaktion gebracht werden;
- gleichzeitig wirkt er durch den C-Gehalt der Aktivkohle auch als Reduktionsmittel, um möglicherweise im Überschuß gebildetes schädliches Ozon zu CO₂ zu reduzieren.

Vorteilhafterweise wird im erfindungsgemäßen Verfahren die Einstellung der Feldstärke und die Spannung des nichtthermischen Plasmareaktors so gewählt, daß in Verbindung mit einem sorptiv und katalytisch wirkenden Moderator kein vollständiger oxidativer Abbau der Schadstoffmischung erzielt wird. Die nicht vollständig georackten Bestandteile werden zunächst vom Moderator zurückgehalten und die teiloxidierte Schadstoffmischung dann mit einem Desorptionsschleppgas durch zyklisches Spülen entfernt und einer weiteren Reinigungsstufe zugeführt.

Das Produktgemisch der Plasmareinigungsstufe wird vorteilhafterweise mit Geschwindigkeiten zwischen 0,2 m/sec bis 1 m/sec durch den Moderator geleitet. Da in dieser Variante des erfindungsgemäßen Verfahrens die Sorption durch den Moderator (und nicht der vollständige oxidative Abbau der plasmabehandelten Schadstoffmischung am Katalysator) optimiert wird, können in Verbindung mit einer biologischen Reinigungsstufe sehr preiswerte Aktivkohlekatalysatoren mit nur geringen Mengen an metallischer Beschichtung zur Anwendung gelangen. Dadurch wird das Verfahren deutlich verbilligt.

Wird als Alternative zur oben genannten Ausführungsform das Plasmaverfahren der biologischen Reinigungsstufe vorgeschaltet, kann eine hohe Adsorptionswirkung des Moderators unerwünscht sein. Der Moderator wird dann vorteilhafterweise so gewählt, daß er toxische bzw. reaktive Produkte der Plasmareinigungsstufe entfernt oder umsetzt, um die Wirkung der biologischen Reinigungsstufe nicht zu beinträchtigen. Bei vorgeschalteter Plasmareinigungsstufe eignen sich insbesondere Moderatoren auf biologischer Basis, wie z.B. Rinde, Torf, Rindenmulch oder Trester. Diese können im Abluftstrom vor Eintritt in die biologische Reinigungsstufe oder auch im Biomaterial selbst angebracht werden. Bevorzugterweise wird bei dieser Verfahrensvariante der Moderator in einer Schicht von 150 bis 400 mm Höhe und bei einer Abluftgeschwindigkeit von ca. 0,02-0,1 m/sec eingesetzt. Moderatoren auf biologischer Basis können somit in vorteilhafter Weise adsorbierend wirkende Katalysatoren auf Aktivkohlebasis ersetzen oder ergänzen, da beide Moderatortypen in der Lage sind, die in der Plasmareinigungsstufe gebildeten Ionen und aktiven Gasbestandteile zu neutralisieren, indem sie Oxidationsvorgänge eingehen. Moderatoren auf biologischer Basis sind jedoch wirtschaftlicher.

Weist die Schadstoffmischung größere Anteile an halogenierten, insbesondere chlorierten Kohlenwasserstoffen auf, setzt man vorteilhafterweise einen Moderator ein, der in der Lage ist, die in der Plasmareinigungsstufe gebildete Halogenwasserstoffsäure (bzw. HCl) zu binden. Zu diesem Zweck eignen sich z.B. alkalische wässrige Salzlösungen, Calciumcarbonat (vorzugsweise in einem Kornbereich von 5 bis 15 mm), Dolomit oder Metallhydroxide (z.B. Alkalimetallhydroxide oder Erdalkalimetallhydroxide wie Ca(OH)₂) bzw. ihre wässrigen Lösungen. Solch ein absorbierend wirkender Moderator kann auch in Verbindung mit adsorbierend und/oder katalytisch wirksamen Moderatoren, wie sie zuvor beschrieben wurden, eingesetzt werden.

Zur Desorption des Moderators wird vorteilhafterweise Stickstoff, Kohlendioxid, Luft oder schadstoffhaltige Luft eingesetzt. Günstige Ergebnisse werden erzielt, wenn man das Desorptionsgas auf eine Temperatur von 50 bis 135°C, vorzugsweise 80-120°C, erwärmt. Das Volumenverhältnis (Desorptionsgas) : (schadstoffhaltige Abluft) liegt üblicherweise bei 1 : 10.

### Figuren

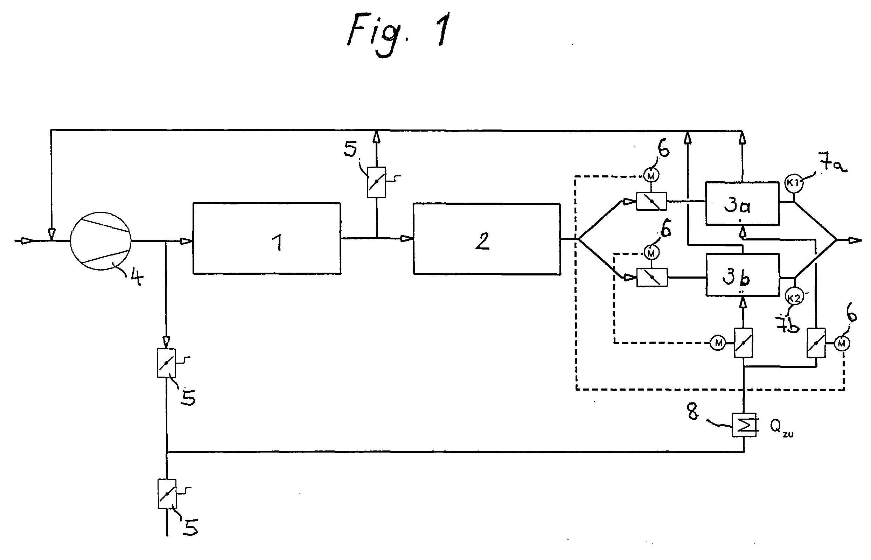

Fig. 1 erläutert eine vorteilhafte Ausführungsform des erfindungsgemäßen Verfahrens, bei der ein nicht-thermischer Plasmareaktor einer biologischen Reinigungsstufe nachgeschaltet ist. In Fig. 1 bedeutet (1) biologische Reinigungsstufe, (2) nicht-thermischer Plasmareaktor, (3a/3b) Moderator in Form zweier räumlich getrennter Einheiten, (4) Abgasventilator, (5) handbetätigte Klappe, (6) motorbetätigte Klappe, (7a/7b) Konzentrationsmeßgeräte (K1/K2) und (8) (Q_{zu}) eine Heizvorrichtung.

### Beispiele

Die vorliegende Erfindung wird durch die beiden folgenden Beispiele näher erläutert.

Falls nicht anders angegeben, wurden im folgenden sämtliche Konzentrationsmessungen on-line mit Hilfe eines geeichten FID-Detektors (Flammenionisationsdetektors; Schwellenwert: ± 2ppm Schadstoff) oder nach gaschromatographischer Auftrennung der Schadstoffkomponenten über den FID-Detektor vorgenommen. Die Konzentrationsangaben g/m³ (mg/m³) beziehen sich auf die unbehandelte bzw. behandelte Abluft. Falls nicht anders angegeben, beziehen sich die Prozentangaben auf das Gewicht.

### Beispiel 1

Eine biologische Festbettanlage (1) mit Biohumusmaterial (Grünkompost) wurde einem Plasmareaktor (2) mit Röhrenelektroden und dielektrischen Barrieren (aus Glas) vorgeschaltet. 5000 m³ /h eines Abgases, das 1 g/m³ Styrol und 500 mg/m³ Butylacetat als Gemisch enthielt, durchströmte die biologische Reinigungsstufe (1), der eine Pefeuchtungszone vorgeschaltet war. Die Raumbelastung des Schadstoffgemischs betrug ca. 50 g/m³ Biomaterial x h. Die Abluft hatte Raumtemperatur und eine Luftfeuchtigkeit von 92%. Durch gaschromatographische Analyse wurde ermittelt, daß unter diesen Bedingungen in der biologischen Reinigungsstufe 900 mg/m³ Styrol und 100 mg/m³ Butylacetat abgebaut werden. Nach der biologischen Reinigungsstufe wurde das Gemisch in den nicht-thermischen Plasmareaktor geführt, wobei die Feldstärke des Plasmareaktors mit 8.000 V/cm so gewählt wurde, daß ca. 30 mg/m³ Styrol und 300 mg/m³ Butylacetat weitgehend abgebaut bzw. teiloxidiert (gecrackt) wurden. Die Temperatur betrug hierbei 40°C; als Frequenz wurden 400 Hz vorgegeben. Nach der Plasmareinigungsstufe durchströmte das Gemisch einen Moderator, der im Zuge des Versuchs als zyklisch geschaltete Einheit genutzt wurde. Der Moderator lag in zwei räumlich getrennten, parallel geschalteten Einheiten vor und bestand aus einem adsorbierend wirkenden Aktivkohlekatalysator (mit 5-10% Fe₂(SO₄)₃/CuSO₄ imprägniert). In der ersten Einheit (3a) wurden insgesamt 20 mg/m³ an Butylacetat und Styrol abgebaut. Es verblieb eine Mischung von etwa 700 mg/m³ an nicht umgesetztem bzw. teiloxidierten Styrol und Butylacetat, die vom Moderator adsorbiert wurden. Diese Mischung enthielt weniger als 10 Gew.-% der ursprünglichen Schadstoffe Styrol und Butylacetat. Bei ca. 90 Gew.-% handelt es sich um gecrackte organische Bestandteile.

Die Anlage wurde so lange betrieben, bis das FID-Gerät (7a) den Durchbruch des adsorbierend wirkenden Moderators in der Einheit (3a) anzeigt. Danach wurde der Abgasstrom auf die zweite Einheit (3b) geschaltet. Der zuvor in Betrieb befindliche Moderator (3a) wurde aus dem Gasstrom herausgenommen und mit Luft regeneriert (desorbiert), die in der Heizvorrichtung (8) auf 110°C erhitzt wurde. Die beladene Desorptionsluft wurde in den Abgasventilator (4) zurückgeführt und von dort erneut in die biologische Reinigungsstufe (1) eingeleitet. Butylacetat und Styrol bzw. die gecrackten Restprodukte wurden zu mehr als 90% abgebaut; nach dem zweiten Durchlauf durch die biologische Reinigungsstufe lag der Styrol-Gehalt unterhalb 70 mg/m³ und der Butylacetat-Gehalt unterhalb von 50 mg/m³.

Beispiel 1 läßt erkennen, daß eine biologische Reinigungsstufe Mischungen mit hohen Butylacetat-Konzentrationen nur äußerst unvollständig abbaut (gemäß Beispiel 1 wird Butylacetat nur zu 20% abgebaut bei gleichzeitiger Reduktion des Styrolgehalts um 90%). Erst die Kombination mit einer nicht-thermischen Plasmareinigungsstufe ermöglicht daher den vollständigen Abbau mit einem wirtschaftlich vertretbaren Aufwand. Generell lassen sich durch das Nachschalten einer nicht-thermischen Plasmareinigungsstufe die Investitionskosten für die biologische Reinigungsstufe um 30-40% senken. Ferner war der Flächenbedarf der Gesamtanlage trotz zusätzlichen Platzbedarfs durch den Plasmareaktor um ca. 50-60% kleiner, als wenn eine biologische Anlage alleine zur Anwendung gekommen wäre.

### Beispiel 2

Der nicht-thermische Plasmareaktor des Beispiel 1 wurde einer biologischen Festbett-Reinigungsstufe mit Biohumusmaterial (Grünkompost) vorgeschaltet. 1000 m³/h eines Abgases, das 1 g Lösemittelgemisch/m³ Abluft mit einem Gehalt von 80 mg Dichlorbenzol /m³ Abluft enthielt, wurden durch die nichtthermische Plasmareinigungsstufe geleitet. Die Feldstärke im Plasmareaktor wurde mit 15.000 V/cm (Frequenz 400 Hz) so eingestellt, daß ca. 50 mg/m³ Dichlorbenzol abgebaut wurden. Die Temperatur betrug 50°C. Hierbei bildete sich Salzsäure und teiloxidiertes organisches Restmaterial. Das in der Plasmareinigungsstufe gebildete Reaktionsgas wurde aufgefangen, gaschromatographisch isoliert und der Dichlorbenzolanteil mit einem geeichten FID-Detektor bestimmt. Ferner wurde zur Kontrolle der gebildete Salzsäureanteil durch eine chemische Analyse bestimmt.

Als absorbierend wirkender Moderator wurde vor die biologische Reinigungsstufe eine 20 cm hohe Schicht aus gekörntem Ca(OH)₂ (Korndurchmesser ca. 3mm) geschaltet, die die Salzsäure neutralisierte. Die organischen Restbestandteile durchströmten das Calciumhydroxid und wurden in der biologischen Reinigungsstufe nach einer Vorbefeuchtung auf 95% Luftfeuchte bei ca. 25°C und einer Raumbelastung von 70 g/m³ Biomaterial/h zu mehr als 90% abgebaut. Der Restgehalt an Lösungsmittelanteilen lag bei < 100 mg/m³. Wie die gaschromatographische Analyse ergab, war der Dichlorbenzol-Anteil zu mehr als 90% abgebaut (< 7 mg/m³).

Der Energieaufwand des erfindungsgemäßen Beispiels 2 liegt bei ca. 20 bis 25 kWh für 1.000 m³ Abgas.

Um das gleiche Ergebnis in einer nicht-thermischen Plasmareinigungsstufe zu erzielen, ohne diese mit einer biologischen Reinigungsstufe zu kombinieren, mußte eine elektrische Energie von ca. 130 kWh für 1.000 m³ Abgas aufgewendet werden.

Daran läßt sich erkennen, daß die Kombination einer biologischen Reinigungsstufe mit einer nicht-thermischen Plasmareinigungsstufe zu erheblichen Energieeinsparungen führt. Trotz zusätzlicher Reinigungsstufe lassen sich die Betriebskosten somit um 40-50% senken.

Somit erkennt man als besonderen Vorteil dieser Verfahrensvariante, daß es gelingt, halogenierte Kohlenwasserstoffe, die sich in einer biologischen Reinigungsstufe nicht abbauen lassen, in einer Plasmareinigungsstufe effektiv zu entfernen. Die alleinige Verwendung eines Plasmaverfahrens würde zu unverhältnismäßig hohen Betriebskosten führen.

Somit ist das erfindungsgemäße Verfahren hinsichtlich Platzbedarf und Energieaufwand eine günstigere Alternative zu herkömmlichen nachverbrennenden Verfahren, wie sie beispielsweise zur Dioxinunterdrückung eingesetzt werden.

## Patentansprüche

1. Verfahren zur Reinigung von schadstoffhaltiger Abluft, dadurch gekennzeichnet, daß man die Abluft durch eine biologische Reinigungsstufe und eine nicht-thermische Plasmareinigungsstufe führt.

2. Verfahren nach Anspruch 1, dadurch gekennzeichnet, daß man die biologische Reinigungsstufe aus der Reihe Biofilter, Biowäscher und Biomembranverfahren auswählt.

3. Verfahren nach Anspruch 1 oder 2, dadurch gekennzeichnet, daß man die Abluft bei einer Temperatur von 15-60°C, bei einer Luftfeuchte von 75-99% und bei einer Raumbelastung von 30-250 g Schadstoff / (m³ Biomaterial x h) durch die biologische Reinigungsstufe führt.

4. Verfahren nach einem oder mehreren der vorhergehenden Ansprüche, dadurch gekennzeichnet, daß man die nichtthermische Plasmareinigungsstufe aus der Reihe dielektrischer Barrierereaktor und Kugelreaktor auswählt.

5. Verfahren nach Anspruch 4, dadurch gekennzeichnet, daß man die nicht-thermische Plasmareinigungsstufe bei einer Feldstärke von 1.500 bis 50.000 V/cm, einer Frequenz von 50 bis 3.000 Hz und bei einer Temperatur von -20°C bis +300°C betreibt.

6. Verfahren nach einem oder mehreren der vorhergehenden Ansprüche, dadurch gekennzeichnet, daß man die biologische Reinigungsstufe der nicht-thermischen Plasmareinigungsstufe vorschaltet.

7. Verfahren nach Anspruch 6, dadurch gekennzeichnet, daß man die durch die nicht-thermische Plasmareinigungsstufe geführte schadstoffhaltige Abluft in die biologische Reinigungsstufe oder in die Plasmareinigungsstufe zurückführt.

8. Verfahren nach einem oder mehreren der vorhergehenden Ansprüche 1-5, dadurch gekennzeichnet, daß man die nichtthermische Plasmareinigungsstufe der biologischen Reinigungsstufe vorschaltet.

9. Verfahren nach einem oder mehreren der vorhergehenden Ansprüche, dadurch gekennzeichnet, daß man die Abluft nach der Plasmareinigungsstufe durch bzw. über einen absorbierenden bzw. adsorbierenden Moderator führt.

10. Verfahren nach Anspruch 9, dadurch gekennzeichnet, daß man den Moderator aus Unedelmetallkatalysatoren, Edelmetallkatalysatoren, Aktivkohle, Salzlösungen, Calciumcarbonat, Dolomit, Metallhydroxiden, wässrigen Lösungen von Metallhydroxiden, Rinde, Torf, Rindenmulch, Trester oder Kombinationen hiervon auswählt.

11. Verfahren nach Anspruch 9 oder 10, dadurch gekennzeichnet, daß man den Moderator mit einem Desorptionsgas behandelt und regeneriert.

12. Verfahren nach Anspruch 11, dadurch gekennzeichnet, daß man das aus dem Moderator desorbierte Gas in die biologische Reinigungsstufe oder in die nicht-thermische Plasmareinigungsstufe zurückführt.

13. Verfahren nach Anspruch 11 oder 12, dadurch gekennzeichnet, daß der Moderator in zwei räumlich getrennten, parallel geschalteten Einheiten vorliegt, und man die Abluft aus der Plasmareinigungsstufe durch die erste Einheit führt, während man die andere Einheit mit einem Desorptionsgas behandelt und regeneriert, und gegebenenfalls das aus dem Moderator desorbierte Gas in die biologische Reinigungsstufe oder die nicht-thermische Plasmareinigungsstufe zurückführt.

14. Verfahren nach einem oder mehreren der vorhergehenden Ansprüche 11-13, dadurch gekennzeichnet, daß man das Desorptionsgas aus der Reihe Stickstoff, Kohlendioxid, Luft oder schadstoffhaltige Abluft auswählt.
